# NOUVEAU FASCICULE DE BREVET EUROPEEN

(11) **EP 1 935 682 B2**
(45) Date de publication et mention de la décision concernant l'opposition: **15.06.2016**
(45) Mention de la délivrance du brevet: 04.08.2010
(21) Numéro de dépôt: 07122732.6
(22) Date de dépôt: 10.12.2007
(51) Int. Cl.: B60H 1/00

(54) **Conduit pour un flux d'air**
Leitung für einen Luftstrom
Conduit for an air flow

(30) Priorité: 22.12.2006 FR 0611305
(43) Date de publication de la demande: 25.06.2008
(73) Titulaire: Valeo Systèmes Thermiques, 78321 Le Mesnil Saint Denis Cedex (FR)
(72) Inventeur: Vincent, David, 28320 Gallardon (FR)

(56) Documents cités:
- EP-A1- 0 338 908
- WO-A-2005/092649
- DE-A1- 2 113 284
- DE-A1- 19 807 411

## Description

L'invention concerne une installation de chauffage, ventilation et/ou climatisation d'un habitacle, en particulier de véhicule automobile.

Elle concerne plus particulièrement une installation de chauffage, ventilation et/ou climatisation comprenant un conduit comportant une enceinte périphérique, une bouche d'entrée et une bouche de sortie définissant un volume intérieur apte à canaliser un flux d'air.

De tels conduits sont agencés pour guider un flux d'air entre divers points d'une installation aéraulique, tels que décrits notamment dans WO2005/092649. En particulier, elles sont utilisées dans des installations de chauffage, ventilation et/ou climatisation d'un habitacle, notamment de véhicule automobile, en permettant l'admission d'un flux d'air dans l'installation et/ou la distribution d'un flux d'air traité, en particulier thermiquement, en divers espaces de l'habitacle.

Le document DE 197 30 241 montre le préambule de la revendication 1 ou 13.

Ces conduits peuvent être disposées par exemple dans une zone dédiée de l'habitacle afin de procurer un flux d'air apte à améliorer le confort des occupant de la zone considérée. Il en va ainsi des conduits agencés en sortie d'une installation chauffage, ventilation et/ou climatisation pour canaliser un flux d'air vers la zone 'pieds' ou la zone 'arrière' d'un habitacle.

Toutefois, les demandes actuelles tendent à avoir des installations qui soient les plus compactes possibles tout en autorisant des fonctionnalités accrues. Ain si, il est devenu nécessaire de disposer l'ensemble des dispositifs de commande et des conduits de distribution d'air dans l'espace alloué.

Néanmoins, ces exigences créent des contraintes de dispositions afin d'obtenir un compromis entre l'agencement des dispositifs de commande et des conduits de distribution d'air. Cela crée des efforts de transmission non souhaités dans les dispositifs de commandes ou des performances dégradées par la création de pertes de charge dues à une disposition non optimisée des conduits.

De plus, les tendances vont actuellement vers une standardisation des installations de chauffage, ventilation et/ou climatisation.

Ainsi, pour un même véhicule suivant le niveau de finition de ce dernier ou les options choisis par l'utilisateur final, il est devenu nécessaire de disposer d'une installation modulaire permettant de répondre à ces divers besoins en réduisant le nombre de références.

Il est donc connu de disposer dune centrale aérothermique comportant les divers composants permettant de traités le flux d'air qualitativement et/ou thermiquement, tels que notamment un filtre, un évaporateur un radiateur de chauffage... En complément de cette centrale aérothermique, des modules additionnels sont agencés en périphérie de celle-ci afin d'assurer la distribution du flux d'air dans les différentes zones de l'habitacle.

Le nombre de ces modules est défini par les spécificités finales de l'installation. Par exemple, pour une installation dite 'basique', la centrale aérothermique sera équipée d'un module de distribution et d'un conduit 'pied'. Pour une installation dite 'haut de gramme', la centrale aérothermique sera équipée d'un module de distribution, de conduits 'pied' droite et gauche et de conduits 'arrière' droite et gauche

Cette variété de configuration rend la standardisation complexe. De plus, la conception d'architectures d'installation de chauffage, ventilation et/ou climatisation répondant à de telles nécessités est longue et compliquée.

L'objet de la présente invention est de surmonter les inconvénients précités. A cet effet, l'invention propose une installation de chauffage, ventilation et/ou climatisation selon la revendication 1 ou 13.

De plus, selon une variante de réalisation, le passage traversant comporte une section transversale ayant une forme circulaire ou une forme profilée.

Dans un mode de réalisation préféré de l'invention, l'enceinte périphérique est constituée de au moins deux coquilles aptes à coopérer entre elles.

Selon ce mode de réalisation, les deux coquilles comprennent respectivement une première portion de canal et une deuxième portion de canal coopérant entre elles pour définir le passage traversant.

La première portion de canal comprend une extrémité coopérant par complémentarité de forme avec une extrémité de la deuxième portion de canal.

De façon particulièrement avantageuse, la première portion de canal comprend une extrémité conique coopérant par complémentarité de forme avec l'extrémité de la deuxième portion de canal.

Selon un mode particulier de réalisation, le conduit comprend des moyens d'assemblage destiné à assurer le montage du conduit sur un dispositif de distribution du flux d'air.

Selon un mode particulier de réalisation, l'organe de transmission de mouvement est un câble coulissant dans une gaine ou un arbre flexible.

Selon les divers modes de réalisation de l'installation chauffage, ventilation et/ou climatisation, la section transversale du passage traversant est telle qu'elle permet un débattement de l'organe de transmission ou du faisceau électrique.

L'invention vise à améliorer la situation. C'est en conséquence un des buts de l'invention de proposer une installation de chauffage, ventilation et/ou climatisation en assurant une standardisation optimisée des composants et des performances améliorées. De plus, grâce à l'invention, on peut réaliser un passage étanche à l'air traversant un conduit d'air.

D'autres avantages et caractéristiques de l'invention apparaîtront à la lecture de la description qui suit. Cette description est purement illustrative et donnée à titre d'exemple et doit être lue en se référant aux dessins annexés sur lesquels on a représenté
- la figure 1 est une vue en perspective d'un conduit d'une installation de chauffage, ventilation et/ou de climatisation selon la présente invention,
- la figure 2 est une vue de coté du conduit de la figure 1.
- la figure 3 est une vue en perspective d'une première coquille composant un conduit d'une installation de chauffage, ventilation et/ou de climatisation selon la présente invention,
- la figure 4 est une vue en perspective d'une deuxième coquille composant un conduit d'une installation de chauffage, ventilation et/ou de climatisation selon la présente invention,
- la figure 5 est une vue en perspective d'une installation de chauffage, ventilation et/ou climatisation selon la présente invention,
- la figure 6 est une vue de face d'une Installation de la figure 5.

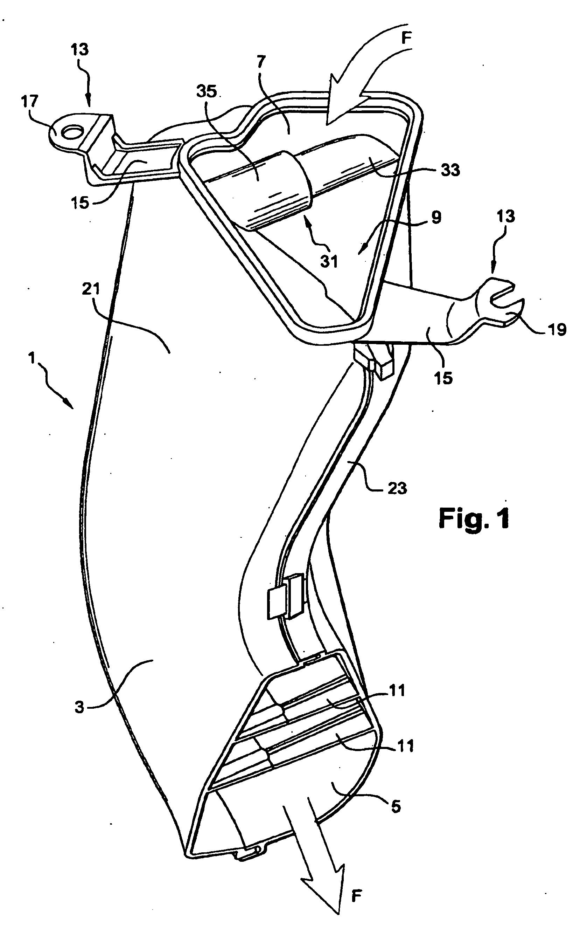

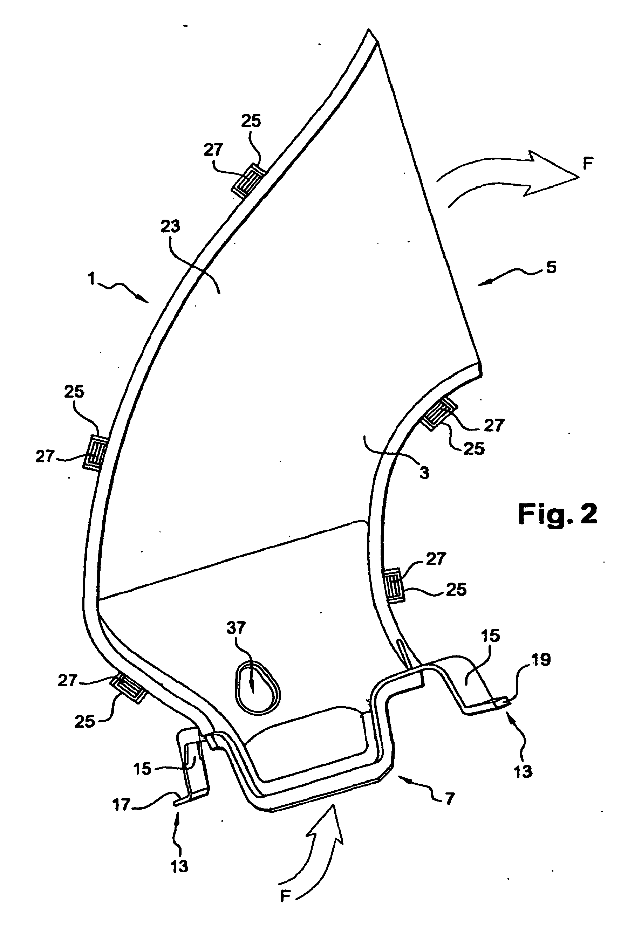

On se réfère d'abord aux figures 1 et 2 qui montrent un conduit 1 comprenant une enceinte périphérique 3. La conduite 1 comporte une bouche de sortie 5 et une bouche d'entrée 7. La bouche de sortie 5, la bouche d'entrée 7 et l'enceinte périphérique 3 définissent un volume intérieur 9.

Le volume intérieur 9 est traversé par un flux d'air F entrant dans la conduite 1 par la bouche d'entrée 7 et quittant la conduite 1 par la bouche de sortie 5.

La bouche de sortie 5 de la conduite comporte des aubes 11 agencées pour diriger le flux d'air F à l'extérieur de la conduite 1. En particulier, les aubes 11 permettent de diriger le flux d'air F vers une zone dédiée de l'habitacle en minimisant les pertes de charges.

La conduite 1 comporte également sur la face extérieure de l'encel nte périphériques des moyens d'assemblage 13. Les moyens d'assemblage 13 comporte une patte 15 dont une première extrémité est reliée à l'enceinte périphérique 3. La liaison entre la première extrémité de la patte 15 et l'enceinte périphérique 3 peut être réalisé parcollag e o u par tout autre moyen de liaison. Selon un mode particulier de la présente invention, la patte 15 peut être issu de moulage simultanément avec l'enceinte périphérique 3.

La deuxième extrémité de la patte 15 comporte une zone de maintien. La zone de maintien peut être réalisé, selon le présent exemple, par une rondelle percée 17 ou une rondelle fendue 19.

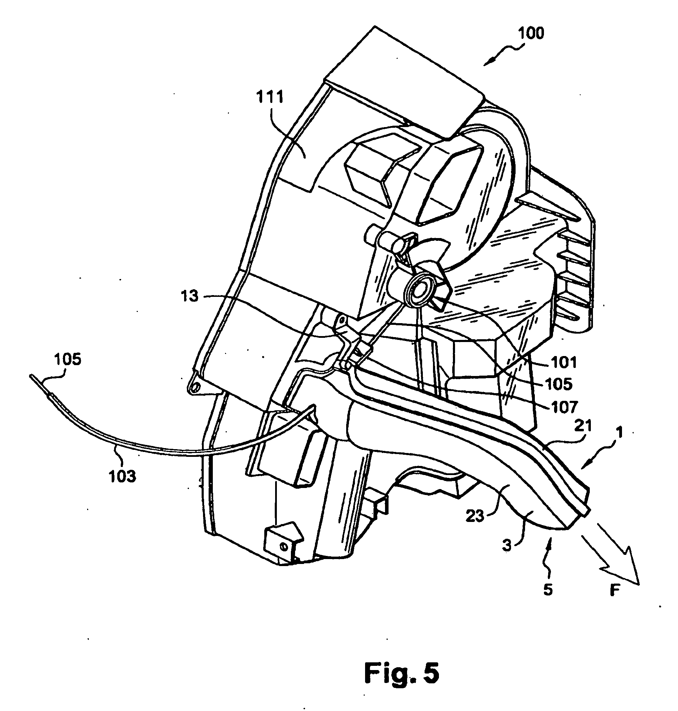

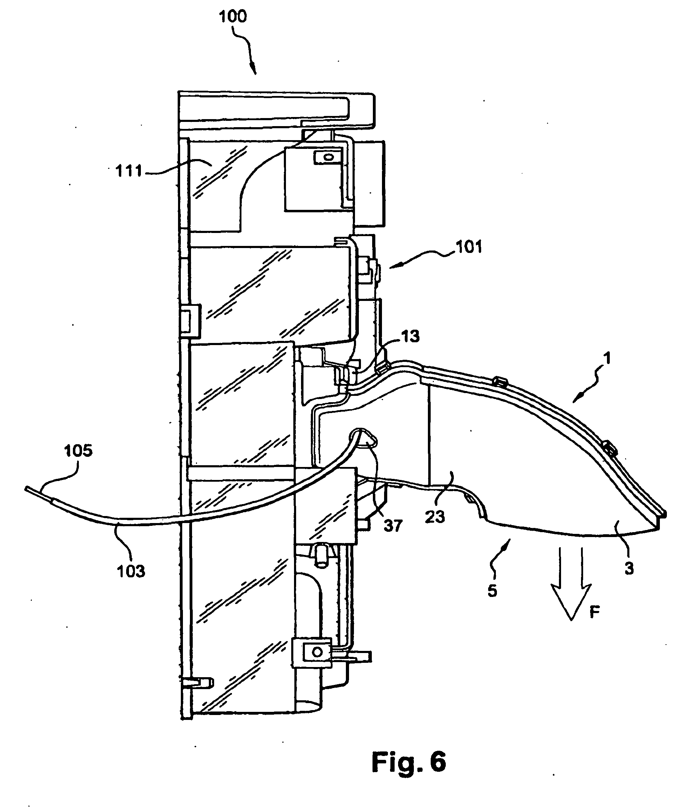

Les moyens d'assemblage 13 permettent le montage de la conduite 1 surune paroi d'une installation 100 telle que présenté aux figures 5 et 6. Ils assurent donc un montage simple et efficace permettant la mise à niveau de l'installation en fonction du niveau de gamme et du degré d'option requis.

Selon la présente invention, l'enceinte périphérique 3 est constituée de deux coquilles 21 et 23 coopérant entre elles. La coquille 21 comprend une nervure s'insérant dans une rainure de la coquille 23 par complémentarité de forme. Par cet assemblage, l'étanchéité du plan de joint entre les coquilles 21 et 23 est assurée.

Pour assurer la cohésion des coquilles 21 et 23 entre elles, des moyens de maintien sont prévus respectivement sur les coquilles 21 et 23. Selon l'exemple particulier de la présente réalisation, les moyens de maintien sont constitués, d'une part, par une accroche 27 liée à la coquille 21 et comprenant à son extrémité libre une dent et, d'autre part, par un passant 25 lié à la coquille 23. Lors de l'assemblage des coquilles 21 et 23 entre elles, l'accroche 27 entre dans le passant 25. En position finale, la dent de l'accroche vient s'appuyer contre le passant en assurant un moyen apte à éviter la désolidarisation des coquilles 21 et 23.

La conduite 1 comprend également un passage 31 traversant le volume intérieur 9. Le passage 31 prend appui sur la paroi périphérique 3 et assure une communication de part et d'autre de la conduite 1. Plus particulièrement, le passage 31 est un élément tubulaire pénétrant dans la conduite 1 à travers le volume intérieur 9.

Le passage 31 crée deux ouvertures 37 et 39 dans la paroi périphérique 3 de la conduite 1. L'élément tubulaire assure une communication étanche entre les ouvertures 37 et 39 au flux d'air parcourant le volume intérieur 9 de la conduite 1.

Selon la présente invention, le passage 31 est réalisé par la coopération de deux portions de canal 33 et 35 coopérant entre elles afin de matérialiser l'élément tubulaire du passage 31.

L'étanchéité à l'air du passage 31 est réalisée par un emmanchement spécifique des deux portions de canal 33 et 35 entre elles, en particulier par un emmanchement conique tel que détaillé par allleurs.

La section transversale de l'élément tubulaire du passage 31 est de forme sensiblement profilée. En particulier, elle a une forme dite'en goutte d'eau', comme représentée en figure 2. Cette forme est particulièrement avantageuse d'un point de vue aéraulique. En effet, elle favorise l'écoulement du flux d'air dans le volume intérieur 9 tout en minimisant les pertes de charges du à la présence d'un corps au travers de la circulation du flux d'air.

De plus, la forme profilée autorise un débattement accru de l'organe passant dans le passage 31.

Toutefois, la section transversale de l'élément tubulaire du passage 31 peut avoir toutes autres formes, en particulier circulaire.

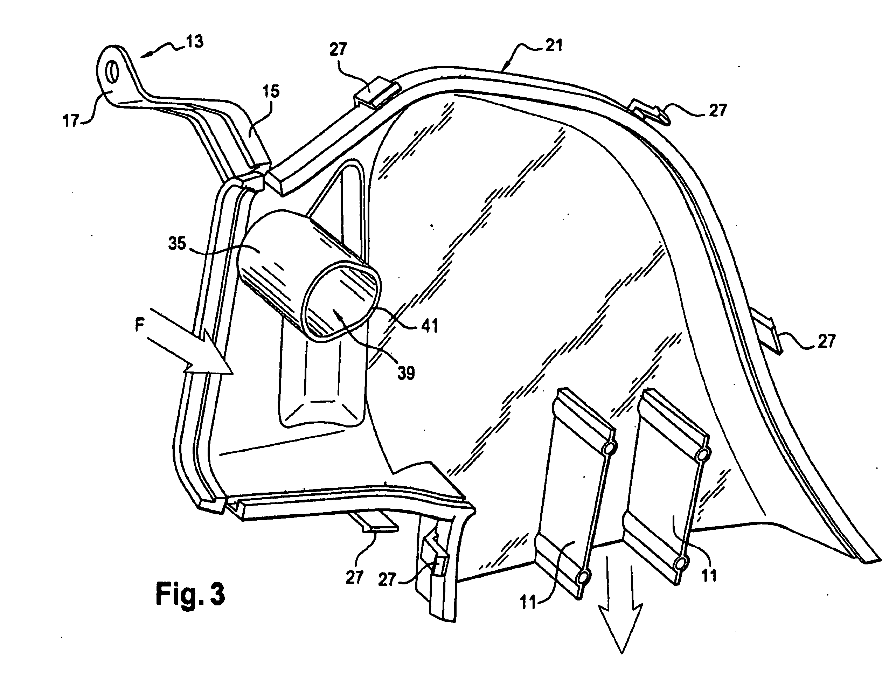

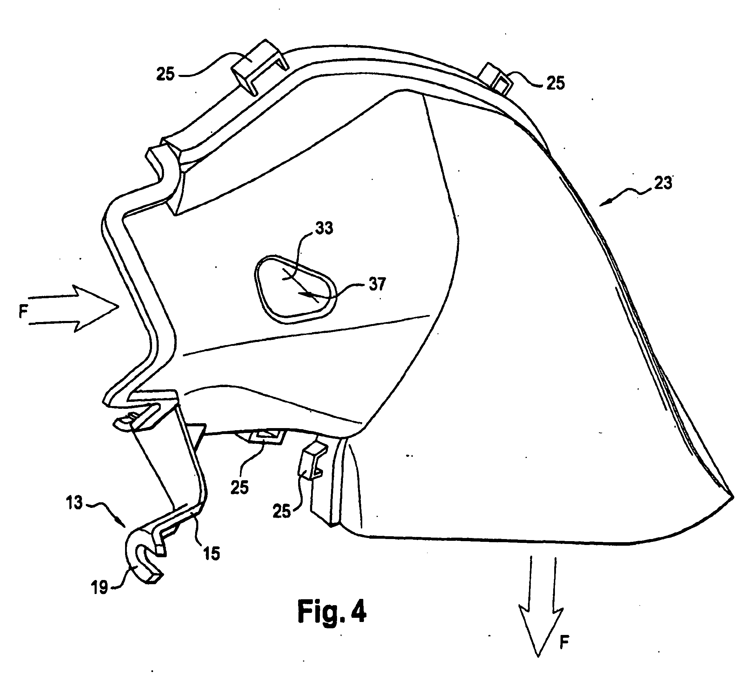

On se rapporte dorénavant aux figures 3 et 4 présentant respectivement les coquilles 21 et 23 composant la conduite 1. La coquille 21 est présentée en figure 3.

La coquille 21 comporte une paroi extérieure servant de support au moyen d'assemblage 13 composé par la patte 15 et la zone de maintien, réalisée selon la présente réalisation, par la rondelle percée 17. La coquille 21 comprend également des accroches 27 comme première partie des moyens de maintien. La coquille 21 comporte enfin une portion des aubes 11 dirigeant le flux d'air F.

La portion des aubes 11 de la coquille 21 coopèrent avec une portion identique des aubes 11 portées parla coquille 23. Lors de l'assemblage des coquilles 21 et 23 les deux portions des aubes 11 viennent en vis-à-vis pour former les aubes 11 dans leur intégralité aptes à canaliser le flux d'air F.

La coquille 23 comprend également un moyen d'assemblage 13 composés par la patte 15 et la zone de maintien, réalisée selon la présente réalisation, par la rondelle fendue 19. Elle comporte également des passants 25 comme deuxième partie des moyens de maintien.

La coquille 21 dispose d'une première portion de canal 35 faisant saillie depuis la paroi extérieure de la coquille 21 vers l'intérieure de cette dernière. La portion de canal 35 dispose d'une première extrémité liée à la coquille 21 et une extrémité libre. Selon une réalisation privilégié de la présente Invention, l'extrémité libre de la portion de canal 35 estdeforme sensiblement conique. Dans le présent cas, la conicité de l'extrémité libre de la portion de canal 35 est tournée vers l'intérieur de la portion de canal.

La géométrie conique des extrémités libres des portions de canal 33 et 35 facilite l'emmanchement des deux portiosn de canal l'une dans l'autre et assure la parfaite étanchéité du passage ainsi réalisée.

De plus, cette géométrie des extrémités libres des portions de canal 33 et 35 assure un centrage des deux coquilles 21 et 23 entre elles en simplifiant le montage de ces éléments.

La portion de canal 35 est de section sensiblement tubulaire. Ainsi, la portion de canal 35 définit un passage créant une ouverture 39 dans la paroi extérieure de la coquille 21.

De façon analogue, la coquille 23 dispose d'une deuxième portion de canal 33 faisant saillie depuis la paroi extérieure de la coquille 23 vers l'intérieure de cette dernière. La portion de canal 33 dispose d'une première extrémité liée à la coquille 23 etune extrémité libre. Selon une réalisation privilégiée de la présente invention, l'extrémité libre de la portion de canal 33 est de forme sensiblement conique. Dans le présent cas, la conicité de l'extrémité libre de la portion de canal 33 est tournée vers l'extérieur de la portion de canal.

De façon particulièrement avantageuse, la section de la portion de canal 33 est homothétiquement inférieure à la section de la portion de canal 35. Cette différence de dimensions est définie de telle manière que la portion de canal 33 pénètre dans la portion de canal 35 de façon parfaitement ajustée. Ainsi, la connexion entre les deux portion de canal 33 et 35 est réalisé de manière étanche au flux d'air traversant le volume intérieur 3 de la conduite 1.

Selon u ne variante de réalisation, les extrémité coniques des portions de canal 33 et 35 viennent en coopération l'une contre l'autre afin de réalisation une liaison surfacique.

Dans tous les cas, le montage des portions de canal 33 et 35 assure simultanément une communication étanche et un centrage pour l'assemblage des coquilles 21 et 23 entre elles,

Les figures 5 et 6 présentent une installation 100 de chauffage, ventilation et/ou climatisation disposant d'un conduit 1 telle que décrite précédemment.

L'installation 100 est constituée par un boîtier 111 réalisé, par exemple, par deux parties assemblées entre elles. Sur les figures 5 et 6, seulement une partie du boîtier est représenté.

Selon le mode de réalisation décrit sur ces figures, la conduite 1 est assemblé à une paroi du boîtier 111 par les moyens d'assemblage 13 par l'intermédiaire de vis. La bouche d'entrée 7 de la conduite 1 vient alors en contact surfacique avec la paroi du boîtier 111 pour assurer une liaison étanche à l'air.

L'installation 100 comporte également une cinématique 101 de commande d'un organe mobile agencé à l'intérieur du boîtier 111. La cinématique peut être un pignon, un train d'engrenages, une came ou tous autres dispositifs de commande de mouvement. Le déplacement de la cinématique 101 est commandé par un organe de transmission 103 relié à une première extrémité à la cinématique 101 et à deuxième extrémité à un organe de commande (non représenté), comme un bouton rotatif d'un tableau de commande disposé dans l'habitacle.

L'organe de transmission 103 est un câble 105 coulissant dans une gaine afin de réaliser un câble de type Bowden'. Néanmoins, cet organe de transmission 103 peut également un arbre flexible reliant l'organe de commande à la cinématique 101. De façon préférentielle, l'organe de transmission 103 est maintenu sur le boîtier 111 par un organe de retenu 105. Cet organe de retenu 105 est, par exemple, un clip.

Lors de l'actionnement de l'organe de commande, l'organe de transmission 103 est mis en mouvement et tend à avoir un débattement angulaire. La forme profilée du passage 31 permet d'assurer ce débattement angulaire et ainsi minimiser les efforts de transmission lors de la commande de l'organe mobile agencé à l'intérieur du boîtier 111.

L'ensemble de la description est fait en relation avec un conduit constitué de deux coquilles coopérant entre elles. La présente invention couvre également les modes de réalisation portant sur des conduits mono-corps réalisés en une seule pièce que des conduits composés d'un nombre de parties plus important.

Bien évidemment, l'invention n'est pas limitée aux modes de réalisation décrits précédemment et fournis uniquement à titre d'exemple et englobe d'autres variantes que pourra envisager l'homme du métier dans le cadre des revendications et notamment toutes combinaisons des différents modes de réalisation décrits précédemment.

## Revendications

1. Installation (100) de chauffage, ventilation et/ou climatisation comprenant au moins un conduit (1) canalisant un flux d'air (F) dans un véhicule, ledit conduit (1) comprenant une enceinte périphérique (3), au moins une bouche d'entrée (7) et au moins une bouche de sortie (5) définissant un volume intérieur (9), au moins un passage (31) traversant disposé dans le volume intérieur (9) et débouchant de l'enceinte périphérique (3),
le passage (31) étant étanche au flux d'air (F) canalisé par le conduit (1), **caractérisée en ce que** ladite installation comprend au moins un organe de transmission de mouvement (103), et **en ce que** l'organe de transmission (103) de mouvement passe par le passage (31) traversant.

2. Installation selon la revendication 1, **caractérisée en ce que** le passage (31) traversant comporte une section transversale ayant une forme circulaire.

3. Installation selon la revendication 1 ou 2, **caractérisée en ce que** le passage (31) traversant comporte une section transversale ayant une forme profilée.

4. Installation selon l'une des revendications précédentes, **caractérisée en ce que** l'enceinte périphérique (3) est constituée d'au moins deux coquilles (21, 23) aptes à coopérer entre elles.

5. Installation selon la revendication 4, **caractérisée en ce que** les deux coquilles (21, 23) comprennent respectivement une première portion de canal (35) et une deuxième portion de canal (33) coopérant entre elles pour définir le passage (31) traversant.

6. Installation selon la revendication 5, **caractérisée en ce que** la première portion de canal (35) comprend une extrémité coopérant par complémentarité de forme avec une extrémité de la deuxième portion de canal (33).

7. Installation selon la revendication 6, **caractérisée en ce que** la première portion de canal (35) comprend une extrémité conique coopérant par complémentarité de forme avec l'extrémité de la deuxième portion de canal (33).

8. Installation selon l'une des revendications précédentes, **caractérisée en ce qu'**il comprend des moyens d'assemblage (13) destinés à assurer le montage du conduit (1) sur un dispositif de distribution du flux d'air.

9. Installation de chauffage, ventilation et/ou climatisation selon l'une quelconque des revendications précédentes, **caractérisée en ce que** l'organe de transmission de mouvement (103) est un câble (105) coulissant dans une gaine ou un arbre flexible.

10. Installation de chauffage, ventilation et/ou climatisation selon l'une des revendications précédentes comprenant au moins un faisceau électrique, **caractérisée en ce que** le faisceau électrique passe par le passage (31) traversant.

11. Installation de chauffage, ventilation et/ou climatisation selon l'une des revendications précédentes, **caractérisée en ce que** la section transversale du passage (31) traversant est telle qu'elle permet un débattement de l'organe de transmission (103).

12. Installation de chauffage, ventilation et/ou climatisation selon la revendication 10, **caractérisée en ce que** la section transversale du passage (31) traversant est telle qu'elle permet un débattement de du faisceau électrique.

13. Installation (100) de chauffage, ventilation et/ou climatisation comprenant au moins un conduit (1) canalisant un flux d'air (F) dans un véhicule, ledit conduit (1) comprenant une enceinte périphérique (3), au moins une bouche d'entrée (7) et au moins une bouche de sortie (5) définissant un volume intérieur (9), au moins un passage (31) traversant disposé dans le volume intérieur (9) et débouchant de l'enceinte périphérique (3), le passage (31) étant étanche au flux d'air (F) canalisé par le conduit (1), **caractérisée en ce que** ladite installation comprend au moins un faisceau électrique, et **en ce que** le faisceau électrique passe par le passage (31) traversant.

14. Installation selon la revendication 13, **caractérisée en ce que** le passage (31) traversant comporte une section transversale ayant une forme circulaire.

15. Installation selon la revendication 13 ou 14, **caractérisée en ce que** le passage (31) traversant comporte une section transversale ayant une forme profilée.

16. Installation selon l'une des revendications 13 à 15, **caractérisée en ce que** l'enceinte périphérique (3) est constituée d'au moins deux coquilles (21, 23) aptes à coopérer entre elles.

17. Installation selon la revendication 16, **caractérisée en ce que** les deux coquilles (21, 23) comprennent respectivement une première portion de canal (35) et une deuxième portion de canal (33) coopérant entre elles pour définir le passage (31) traversant.

18. Installation selon la revendication 17, **caractérisée en ce que** la première portion de canal (35) comprend une extrémité coopérant par complémentarité de forme avec une extrémité de la deuxième portion de canal (33).

19. Installation selon la revendication 18, **caractérisée en ce que** la première portion de canal (35) comprend une extrémité conique coopérant par complémentarité de forme avec l'extrémité de la deuxième portion de canal (33).

20. Installation selon l'une des revendications 13 à 19, **caractérisée en ce qu'**il comprend des moyens d'assemblage (13) destinés à assurer le montage du conduit (1) sur un dispositif de distribution du flux d'air.

21. Installation selon l'une des revendications 13 à 20 comprenant au moins un organe de transmission de mouvement (103), **caractérisée en ce que** l'organe de transmission (103) de mouvement passe par le passage (31) traversant.

22. Installation de chauffage, ventilation et/ou climatisation selon la revendication 21, **caractérisée en ce que** l'organe de transmission de mouvement (103) est un câble (105) coulissant dans une gaine ou un arbre flexible.

23. Installation selon l'une des revendications 13 à 22, **caractérisé en ce que** la section transversale du passage (31) traversant est telle qu'elle permet un débattement du faisceau électrique.

24. Installation selon l'une des revendications 21 à 22, **caractérisé en ce que** la section transversale du passage (31) traversant est telle qu'elle permet un débattement de l'organe de transmission (103).

## Patentansprüche

1. Heizungs-, Lüftungs- und/oder Klimaanlage (100), umfassend mindestens eine Leitung (1) zum Kanalisieren eines Luftstroms (F) in einem Fahrzeug, umfassend eine umlaufende Einfassung (3), mindestens eine Eintrittsmündung (7) und mindestens eine Austrittsmündung (5), die ein Innenvolumen (9) definieren, mindestens einen Durchgang (31), der in dem Innenvolumen (9) angeordnet ist und aus der umlaufenden Einfassung (3) ausmündet,
wobei der Durchgang (31) für den in der Leitung (1) kanalisierten Luftstrom (F) dicht ist, **dadurch gekennzeichnet, dass** die Anlage mindestens ein Bewegungsübertragungsorgan (103) umfasst und dass das Bewegungsübertragungsorgan (103) durch den Durchgang (31) geht.

2. Anlage nach Anspruch 1, **dadurch gekennzeichnet, dass** der Durchgang (31) einen kreisförmigen Querschnitt aufweist.

3. Anlage nach Anspruch 1 oder 2, **dadurch gekennzeichnet, dass** der Durchgang (31) einen profilförmigen Querschnitt aufweist.

4. Anlage nach einem der vorhergehenden Ansprüche, **dadurch gekennzeichnet, dass** die umlaufende Einfassung (3) aus mindestens zwei Schalen (21, 23) besteht, die in der Lage sind, miteinander zusammenzuwirken.

5. Anlage nach Anspruch 4, **dadurch gekennzeichnet, dass** die beiden Schalen (21, 23) jeweils einen ersten Kanalabschnitt (35) und einen zweiten Kanalabschnitt (33) umfassen, die miteinander zusammenwirken, um den Durchgang (31) zu definieren.

6. Anlage nach Anspruch 5, **dadurch gekennzeichnet, dass** der erste Kanalabschnitt (35) ein Ende umfasst, das formschlüssig mit einem Ende des zweiten Kanalabschnitts (33) zusammenwirkt.

7. Anlage nach Anspruch 6, **dadurch gekennzeichnet, dass** der erste Kanalabschnitt (35) ein kegelförmiges Ende umfasst, das formschlüssig mit dem Ende des zweiten Kanalabschnitts (33) zusammenwirkt.

8. Anlage nach einem der vorhergehenden Ansprüche, **dadurch gekennzeichnet, dass** die Leitung (1) Verbindungsmittel (13) umfasst, die dazu gedacht sind, den Einbau der Leitung (1) auf einer Vorrichtung zum Verteilen des Luftstroms sicherzustellen.

9. Heizungs-, Lüftungs- und/oder Klimaanlage nach einem der vorhergehenden Ansprüche **dadurch gekennzeichnet, dass** das Bewegungsübertragungsorgan (103) ein Kabel (105) ist, das in einem Mantel oder einer biegsamen Welle gleitet.

10. Heizungs-, Lüftungs- und/oder Klimaanlage nach einem der vorhergehenden Ansprüche, umfassend mindestens einen elektrischen Strang, **dadurch gekennzeichnet, dass** der elektrische Strang durch den Durchgang (31) geht.

11. Heizungs-, Lüftungs- und/oder Klimaanlage nach einem der vorhergehenden Ansprüche, **dadurch gekennzeichnet, dass** der Querschnitt des Durchgangs (31) derart ist, dass er einen Spielraum für das Übertragungsorgan (103) ermöglicht.

12. Heizungs-, Lüftungs- und/oder Klimaanlage nach Anspruch 10, **dadurch gekennzeichnet, dass** der Querschnitt des Durchgangs (31) derart ist, dass er einen Spielraum für den elektrischen Strang ermöglicht.

13. Heizungs-, Lüftungs- und/oder Klimaanlage (100), umfassend mindestens eine Leitung (1) zum Kanalisieren eines Luftstroms (F) in einem Fahrzeug, umfassend eine umlaufende Einfassung (3), mindestens eine Eintrittsmündung (7) und mindestens eine Austrittsmündung (5), die ein Innenvolumen (9) definieren, mindestens einen Durchgang (31), der in dem Innenvolumen (9) angeordnet ist und aus der umlaufenden Einfassung (3) ausmündet, wobei der Durchgang (31) für den in der Leitung (1) kanalisierten Luftstrom (F) dicht ist, **dadurch gekennzeichnet, dass** die Anlage mindestens einen elektrischen Strang umfasst und dass der elektrische Strang durch den Durchgang (31) geht.

14. Anlage nach Anspruch 1, **dadurch gekennzeichnet, dass** der Durchgang (31) einen kreisförmigen Querschnitt aufweist.

15. Anlage nach Anspruch 13 oder 14, **dadurch gekennzeichnet, dass** der Durchgang (31) einen profilförmigen Querschnitt aufweist.

16. Anlage nach einem der Ansprüche 13 bis 15, **dadurch gekennzeichnet, dass** die umlaufende Einfassung (3) aus mindestens zwei Schalen (21, 23) besteht, die in der Lage sind, miteinander zusammenzuwirken.

17. Anlage nach Anspruch 16, **dadurch gekennzeichnet, dass** die beiden Schalen (21, 23) jeweils einen ersten Kanalabschnitt (35) und einen zweiten Kanalabschnitt (33) umfassen, die miteinander zusammenwirken, um den Durchgang (31) zu definieren.

18. Anlage nach Anspruch 17, **dadurch gekennzeichnet, dass** der erste Kanalabschnitt (35) ein Ende umfasst, das formschlüssig mit einem Ende des zweiten Kanalabschnitts (33) zusammenwirkt.

19. Anlage nach Anspruch 18, **dadurch gekennzeichnet, dass** der erste Kanalabschnitt (35) ein kegelförmiges Ende umfasst, das formschlüssig mit dem Ende des zweiten Kanalabschnitts (33) zusammenwirkt.

20. Anlage nach einem der Ansprüche 13 bis 19, **dadurch gekennzeichnet, dass** die Leitung (1) Verbindungsmittel (13) umfasst, die dazu gedacht sind, den Einbau der Leitung (1) auf einer Vorrichtung zum Verteilen des Luftstroms sicherzustellen.

21. Anlage nach einem der Ansprüche 13 bis 20, umfassend mindestens ein Bewegungsübertragungsorgan (103), **dadurch gekennzeichnet, dass** das Bewegungsübertragungsorgan (103) durch den Durchgang (31) geht.

22. Heizungs-, Lüftungs- und/oder Klimaanlage nach Anspruch 21, **dadurch gekennzeichnet, dass** das Bewegungsübertragungsorgan (103) ein Kabel (105) ist, das in einem Mantel oder einer biegsamen Welle gleitet.

23. Anlage nach einem der Ansprüche 13 bis 22, **dadurch gekennzeichnet, dass** der Querschnitt des Durchgangs (31) derart ist, dass er einen Spielraum für den elektrischen Strang ermöglicht.

24. Anlage nach einem der Ansprüche 21 bis 22, **dadurch gekennzeichnet, dass** der Querschnitt des Durchgangs (31) derart ist, dass er einen Spielraum für das Übertragungsorgan (103) ermöglicht.

## Claims

1. Installation (100) for heating, ventilation and/or air conditioning comprising at least one duct (1) channelling an airflow (F) in a vehicle comprising a peripheral enclosure (3), at least one inlet opening (7) and at least one outlet opening (5) defining an interior volume (9), at least one through passage (31) arranged in the interior volume (9) and exiting from the peripheral enclosure (3),
the passage (31) being sealed from the airflow (F) channelled by the duct (1), **characterised in that** said installation comprises at least one movement transmitting member (103), and **in that** the movement transmitting member (103) passes through the through passage (31).

2. Installation according to claim 1, **characterised in that** the through passage (31) comprises a transversal section having a circular form.

3. Installation according to claim 1 or 2, **characterised in that** the through passage (31) comprises a transversal section having a profiled form.

4. Installation according to one of the preceding claims, **characterised in that** the peripheral enclosure (3) is constituted of at least two shells (21, 23) able to cooperate together.

5. Installation according to claim 4, **characterised in that** the two shells (21, 23) include respectively a first portion of channel (35) and a second portion of channel (33) cooperating together in order to define the through passage (31).

6. Installation according to claim 5, **characterised in that** the first portion of channel (35) comprises an end cooperating via complementarity of shape with an end of the second portion of channel (33).

7. Installation according to claim 6, **characterised in that** the first portion of channel (35) comprises a tapered end cooperating via complementarity of shape with the end of the second portion of channel (33).

8. Installation according to one of the preceding claims, **characterised in that** the duct (1) comprises means of assembly (13) intended to provide for the mounting of the duct (1) on a device for dispensing the airflow.

9. Installation for heating, ventilation and/or air conditioning according to any one of the preceding claims, **characterised in that** the movement transmitting member (103) is a cable (105) sliding in a sheath or a flexible shaft.

10. Installation for heating, ventilation and/or air conditioning according to one of the preceding claims comprising at least one wiring harness, **characterised in that** the wiring harness passes through the through passage (31).

11. Installation for heating, ventilation and/or air conditioning according to one of the preceding claims, **characterised in that** the transversal section of the through passage (31) is such that it allows for a displacement of the transmitting member (103).

12. Installation for heating, ventilation and/or air conditioning according to claim 10, **characterised in that** the transversal section of the through passage (31) is such that it allows for a displacement of the wiring harness.

13. Installation (100) for heating, ventilation and/or air conditioning comprising at least one duct (1) channelling an airflow (F) in a vehicle comprising a peripheral enclosure (3), at least one inlet opening (7) and at least one outlet opening (5) defining an interior volume (9), at least one through passage (31) arranged in the interior volume (9) and exiting from the peripheral enclosure (3), the passage (31) being sealed from the airflow (F) channelled by the duct (1), **characterised in that** said installation comprises at least one wiring harness, and **in that** the wiring harness passes through the through passage (31).

14. Installation according to claim 13, **characterised in that** the through passage (31) comprises a transversal section having a circular form.

15. Installation according to claim 13 or 14, **characterised in that** the through passage (31) comprises a transversal section having a profiled form.

16. Installation according to one of claims 13 to 15, **characterised in that** the peripheral enclosure (3) is constituted of at least two shells (21, 23) able to cooperate together.

17. Installation according to claim 16, **characterised in that** the two shells (21, 23) include respectively a first portion of channel (35) and a second portion of channel (33) cooperating together in order to define the through passage (31).

18. Installation according to claim 17, **characterised in that** the first portion of channel (35) comprises an end cooperating via complementarity of shape with an end of the second portion of channel (33).

19. Installation according to claim 18, **characterised in that** the first portion of channel (35) comprises a tapered end cooperating via complementarity of shape with the end of the second portion of channel (33).

20. Installation according to one of claims 13 to 19, **characterised in that** the duct (1) comprises means of assembly (13) intended to provide for the mounting of the duct (1) on a device for dispensing the airflow.

21. Installation according to one of claims 13 to 20 comprising at least one movement transmitting member (103), **characterised in that** the movement transmitting member (103) passes through the through passage (31).

22. Installation for heating, ventilation and/or air conditioning according to claim 21, **characterised in that** the movement transmitting member (103) is a cable (105) sliding in a sheath or a flexible shaft.

23. Installation according to one of claims 13 to 22, **characterised in that** the transversal section of the through passage (31) is such that it allows for a displacement of the wiring harness.

24. Installation according to one of claims 21 to 22, **characterised in that** the transversal section of the through passage (31) is such that it allows for a displacement of the transmitting member (103).
